# FASCICULE DE BREVET EUROPEEN

(11) **EP 3 003 743 B1**
(45) Date de publication et mention de la délivrance du brevet: **08.11.2017**
(21) Numéro de dépôt: 14804113.0
(22) Date de dépôt: 20.05.2014
(51) Int. Cl.: B60D 1/64, H01R 31/06, H01R 107/00

(54) **DISPOSITIF DE BRANCHEMENT ELECTRONIQUE D'UN ENSEMBLE D'ATTELAGE DE VEHICULE**
ELEKTRONISCHE VERBINDUNGSVORRICHTUNG FÜR EINE FAHRZEUGANHÄNGERKUPPLUNG
ELECTRONIC CONNECTION DEVICE FOR A VEHICLE HITCH ASSEMBLY

(30) Priorité: 30.05.2013 FR 1354972
(43) Date de publication de la demande: 13.04.2016
(73) Titulaire: Renault S.A.S., 92100 Boulogne-Billancourt (FR)
(72) Inventeur: WOOD, Anthony, F-92100 Boulogne Billancourt (FR)
(86) Numéro de dépôt international: PCT/FR2014/051162
(87) Numéro de publication internationale: WO 2014/191653

(56) Documents cités:
- EP-A2- 2 269 845
- WO-A1-2005/124943
- DE-U1- 29 613 311
- DE-U1-202004 007 136
- DE-U1-202011 051 902

## Description

L'invention concerne un dispositif de branchement électrique d'un ensemble d'attelage de véhicule acceptant différents formats de branchement. On appelle également l'ensemble d'attelage plus simplement « attelage ».

Il existe actuellement différents formats de prise pour les branchements électriques des attelages de véhicule. Certaines prises présentent des formats comportant 7 branchements, également appelés formats 7 broches, et sont reliées au véhicule par un faisceau électrique de 7 fils. D'autres prises présentent des formats comportant 6 branchements supplémentaires, également appelés formats 13 broches, et sont reliées au véhicule par un faisceau électrique de 13 fils. Bien que 7 branchements soient communs entre ces deux formats de prises, l'agencement de ces 7 branchements n'est pas le même pour une prise à 7 branchements que pour une prise à 7+6 branchements : un adaptateur est alors nécessaire pour passer d'un format 7 broches à un format 13 broches et inversement. Il est ainsi possible de brancher une remorque ou caravane ayant une prise à 13 broches sur un attelage équipé d'une prise 7 broches. Toutefois, l'utilisation de ce type d'adaptateur ne permet pas de conserver l'ensemble des fonctionnalités de la prise 13 broches. Il est alors nécessaire de changer le faisceau électrique à 7 fils du véhicule pour le remplacer par un faisceau électrique à 13 fils si l'on souhaite conserver l'ensemble des fonctionnalités de la remorque ou caravane.

Actuellement, on connait des adaptateurs qui se branchent sur une prise d'attelage. Ce type d'adaptateur comporte une face équipée de fiches mâles branchée à la prise de l'attelage et une face opposée équipée de fiches femelles, pour recevoir la prise de la remorque ou caravane. De tels adaptateurs présentent ainsi un volume relativement important en saillie de la prise d'attelage, ce qui oblige à garder le couvercle de protection de la prise ouvert. Ces adaptateurs ne sont donc pas protégés contre les chocs. Il arrive également que ces adaptateurs soient volés du fait de leur position externe à la prise. Un tel adaptateur est montré dans le document WO 2005/124943 A1. L'invention vise à pallier ces inconvénients en proposant un dispositif de branchement électrique d'un d'attelage de véhicule acceptant différents formats de branchement dont le branchement est protégé.

A cet effet, l'objet de l'invention concerne un dispositif de branchement électrique d'un ensemble d'attelage de véhicule comportant :
- un faisceau d'une pluralité de fils électriques,
- un boîtier comportant un corps équipé d'un fond amovible recevant une extrémité dudit faisceau de fils électriques et d'une ouverture fermée par un couvercle,
- une prise logée à l'intérieur du corps du boîtier, ladite prise recevant ledit faisceau de fils électriques et comportant une pluralité de connecteurs électriques raccordés chacun à un fil dudit faisceau de fils électriques et débouchant sur une face de raccordement de la prise,
- un adaptateur logé à l'intérieur du corps du boîtier entre ladite prise et l'ouverture du corps, ledit adaptateur comportant :
   - une face de branchement située en regard du couvercle en position fermée,
   - une face de raccordement en contact contre la face de raccordement de ladite prise,
   - une pluralité de connecteurs électriques, une extrémité de chaque connecteur électrique débouchant sur la face de branchement selon un schéma d'agencement prédéterminé et une autre extrémité de chaque connecteur électrique débouchant sur la face de raccordement et étant conformée de sorte que chaque connecteur électrique de l'adaptateur soit relié électriquement avec un connecteur électrique de la prise.

Le dispositif selon l'invention présente ainsi l'avantage de proposer un unique faisceau de fils électriques relié à une prise sur laquelle peuvent être placés différents adaptateurs correspondant à différents formats de branchement. Il suffit ainsi de changer d'adaptateur pour changer de format de branchement.

De plus, l'adaptateur étant situé à l'intérieur du boîtier, il se trouve protégé et ne risque plus d'être endommagé par des chocs. Malgré sa position, l'adaptateur reste en outre accessible et facilement interchangeable soit via l'ouverture du corps du boîtier, soit en ôtant le fond amovible du boîtier.

Toutefois, avantageusement, le corps du boîtier peut être conformé du côté de son ouverture de manière à empêcher un retrait dudit adaptateur hors du boitier par ladite ouverture. Cela peut permettre de protéger l'adaptateur contre les dégradations ou les vols, son changement nécessitant le démontage du boîtier, lequel est généralement fixé sur un support, par exemple une plaque, son fond amovible étant plaqué contre ce support.

Un adaptateur peut comprendre avantageusement un nombre de connecteurs électriques inférieur ou égal au nombre de connecteurs électriques de la prise. Ceci peut permettre de conserver les fonctionnalités électriques de chaque format de branchement envisagé, pourvu que le faisceau comporte suffisamment de fils pour assurer les fonctionnalités des différents formats de branchement envisagés.

Selon un premier mode de réalisation, l'adaptateur peut comporter le même nombre de connecteurs électriques que la prise, lesdits connecteurs étant disposés suivant un même schéma d'agencement. L'adaptateur est alors très simple à réaliser et le branchement obtenu permet d'utiliser toutes les fonctionnalités liées aux fils du faisceau de fils.

Pour un faisceau à 13 fils, la prise peut ainsi comporter 13 connecteurs électriques, par exemple agencés suivant la norme ISO DIN 11446. L'adaptateur comporte alors également 13 connecteurs électriques, par exemple agencés suivant la norme ISO DIN 11446.

Selon un autre mode de réalisation, l'adaptateur peut comporter un nombre de connecteurs électriques inférieur au nombre de connecteurs électriques de la prise, chaque connecteur électrique de l'adaptateur se prolongeant, sur la face de raccordement de l'adaptateur, en un fil conducteur se terminant par un élément connecteur situé en regard d'un connecteur électrique de la prise et en contact électrique avec ce dernier, de sorte que le schéma d'agencement des éléments connecteurs est en partie identique au schéma d'agencement des connecteurs électriques de la prise mais différent du schéma d'agencement des connecteurs électriques de l'adaptateur.

Ainsi, pour un faisceau à 13 fils, la prise peut ainsi comporter 13 connecteurs électriques, par exemple agencés suivant la norme ISO DIN 11446. L'adaptateur quant à lui peut comporter 7 connecteurs électriques, par exemple agencés suivant la norme DIN ISO 1724, ses éléments connecteurs étant en revanche agencés suivant un schéma d'agencement correspondant en partie au schéma d'agencement des connecteurs électriques de la prise. Autrement dit, chaque élément connecteur a une position correspondant à l'une des positions d'un connecteur électrique de la prise.

On comprendra ainsi qu'un dispositif de branchement électrique selon l'invention peut être équipé de l'un ou de l'autre des adaptateurs décrits ci-dessus, permettant un changement facile du format de branchement tout en conservant l'ensemble des fonctionnalités de chaque branchement.

Les adaptateurs selon l'invention peuvent présenter un corps présentant la même forme externe et ne se distinguer que par le schéma d'agencement des connecteurs électriques. L'invention ne se limite toutefois pas à des adaptateurs présentant un même corps. Les corps de différents adaptateurs peuvent présenter des formes différentes, pourvu qu'ils puissent être logés à l'intérieur du boîtier et maintenus en contact électrique contre la prise.

Avantageusement, le boîtier peut être conformé de sorte que l'adaptateur soit en appui contre la prise lorsque le fond amovible du boîtier est solidaire du corps du boîtier.

En variante ou en combinaison, le boîtier peut comprendre des moyens de fixation d'un adaptateur à la prise.

En variante ou en combinaison avec les deux modes de réalisation précédents, l'adaptateur et/ou la prise peuvent être équipés de moyens de fixation coopérant l'un avec l'autre.

Notamment, les moyens de fixation peuvent être des moyens d'encliquetage.

Avantageusement et de manière non limitative, les faces de raccordement de ladite prise et dudit adaptateur peuvent être planes ou sensiblement planes et les connecteurs électriques de la prise et de l'adaptateur peuvent être en contact au moyen de parties disposées sur la surface desdites faces de raccordement ou à proximité immédiate desdites faces de raccordement. Le contact électrique entre les connecteurs peut ainsi être obtenu par simple contact entre les faces de raccordement de la prise et de l'adaptateur.

Par exemple, des parties des connecteurs électriques (ou des éléments conducteurs) peuvent former des saillies de faible profondeur sur une face de raccordement coopérant avec des parties de connecteurs électriques situées au fond de dépressions de faible profondeur de l'autre face de raccordement. Par saillies ou dépressions de faible profondeur, on entend des saillies/dépressions ayant des profondeurs de quelques millimètres, par exemple inférieures à 10 mm, voire inférieures à 5 mm et de préférence inférieures à 4mm.

A titre d'exemple, le faisceau de fils du dispositif de branchement électrique selon l'invention peut être un faisceau à 13 fils, les connecteurs électriques de la prise étant alors agencés suivant la norme ISO DIN 11446 et les connecteurs électriques de l'adaptateur étant agencés suivant la norme DIN ISO 1724 ou suivant la norme DIN ISO 11446. Bien entendu, la présente invention ne se limite pas aux agencements prévus dans ces normes et le dispositif de branchement peut être utilisé pour des attelages répondant à d'autres normes ou à des équivalents de ces normes.

L'adaptateur peut être équipé de connecteurs électriques de type femelle, notamment conformés pour recevoir une prise mâle, telle que celles disponibles sur les remorques ou caravanes de véhicule. Ces connecteurs de type femelle peuvent comporter une partie mâle interne.

Avantageusement et de manière non limitative, l'adaptateur et le corps du boîtier peuvent être chacun pourvus d'au moins un élément de détrompage, afin de faciliter le montage de l'adaptateur dans une position correcte par rapport à la prise. Ces éléments de détrompage peuvent être au moins un ensemble de rainure et nervure de forme complémentaire, s'étendant par exemple parallèlement à une direction de montage de l'adaptateur à l'intérieur du boîtier. Une telle direction de montage correspond par exemple à une position de branchement de l'adaptateur sur la prise.

On pourra également prévoir des éléments d'étanchéité de type joint entre un adaptateur et le corps du boîtier, notamment sur le pourtour de l'ouverture du corps, pour améliorer l'étanchéité du boîtier. En variante ou en combinaison, un élément d'étanchéité peut également être disposé entre le corps du boîtier et le couvercle.

Un autre objet de l'invention concerne un ensemble d'attelage de véhicule équipé d'un dispositif de branchement électrique selon l'invention.

L'invention concerne également un véhicule comprenant un dispositif de branchement électrique selon l'invention ou un ensemble d'attelage selon l'invention.

L'invention est maintenant décrite en référence aux dessins annexés, non limitatifs, dans lesquels :
- la figure 1 est une représentation en perspective et en éclaté d'un dispositif de branchement électrique d'attelage selon un mode de réalisation de l'invention et de deux adaptateurs pouvant être montés dans ce dispositif ;
- la figure 2 représente schématiquement et de face le schéma d'agencement des connecteurs électriques pour un branchement respectant la norme ISO DIN 11446 ;
- la figure 3 représente schématiquement et de face le schéma d'agencement des connecteurs électriques pour un branchement respectant la norme DIN ISO 1724 ;
- la figure 4a représente schématiquement et de face, la face de raccordement d'un adaptateur selon un mode de réalisation de l'invention ;
- la figure 4b représente schématiquement une coupe longitudinale de l'adaptateur comprenant la face de raccordement représentée figure 4a ;
- la figure 5 est une vue en coupe partielle du boîtier du dispositif de branchement selon la figure 1 selon la ligne A-A
- la figure 6 est une vue en coupe du boîtier du dispositif de branchement selon la figure 1 selon la ligne B-B.

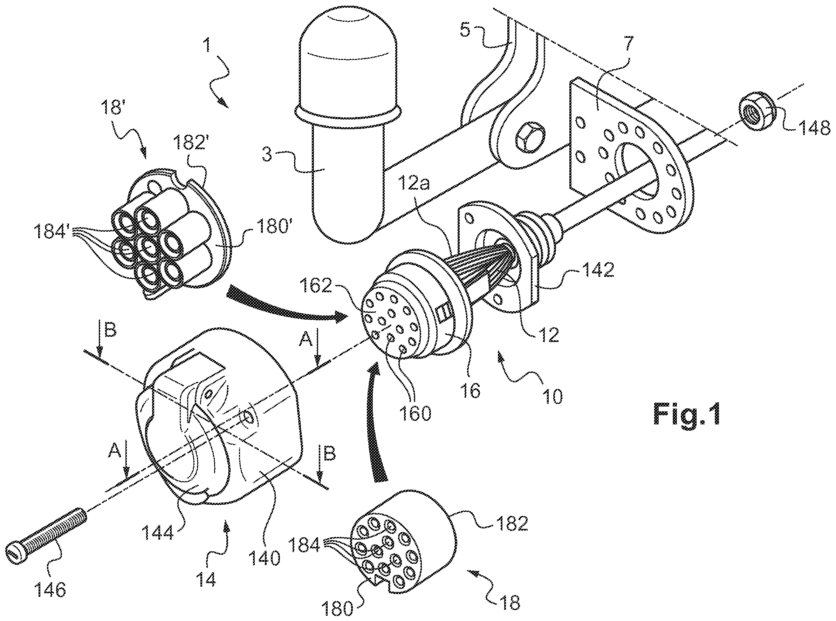

La figure 1 représente un ensemble d'attelage 1 (également désigné « attelage » dans la suite de l'exposé) de véhicule automobile comprenant un crochet d'attelage 3 fixé sur un support 5 lequel est solidarisé au véhicule, notamment à l'arrière d'un véhicule (non représenté). Cet attelage 1 est également équipé d'un dispositif de branchement électrique 10, lequel est fixé sur une plaque support 7 elle-même solidarisée au support 5 du crochet d'attelage 3 dans l'exemple représenté.

Ce dispositif de branchement électrique 10 comporte :
- un faisceau 12 d'une pluralité de fils électriques,
- un boîtier 14,
- une prise 16 logée à l'intérieur du boîtier 14,
- un adaptateur 18 ou 18' logé à l'intérieur du boîtier 14 conformé pour permettre le branchement d'une prise de remorque ou de caravane (non représentée).

Le boîtier 14 comporte un corps 140 équipé d'un fond amovible 142 et d'une ouverture 143 fermée par un couvercle 144. Cette ouverture 143 permet notamment l'accès à l'adaptateur 18 ou 18', après ouverture du couvercle 144, pour le branchement de la prise de remorque sur cet adaptateur 18 ou 18'.

Le fond amovible 142 reçoit une extrémité 12a dudit faisceau 12 de fils électriques, l'autre extrémité de ce faisceau 12 étant raccordée électriquement au véhicule (non représenté).

Dans l'exemple représenté, ce fond amovible 142 est appliqué contre la plaque support 7, à laquelle il peut être vissé. Le corps 140 du boîtier 14 est lui-même vissé sur la plaque support 7, par exemple au moyens de vis 146 et d'écrous 148, un seul ensemble vis/écrou sur trois étant représenté sur la figure 1 pour plus de clarté.

La prise 16 est logée à l'intérieur du corps 140 du boîtier 14. Cette prise 16 reçoit le faisceau 12 de fils électriques et comporte une pluralité de connecteurs électriques 160 raccordés chacun à un fil dudit faisceau 12 de fils électriques et débouchant sur une face de raccordement 162 de la prise 16. Notamment, la prise 16 comprend autant de connecteurs électriques 160 qu'il y a de fils dans le faisceau 12.

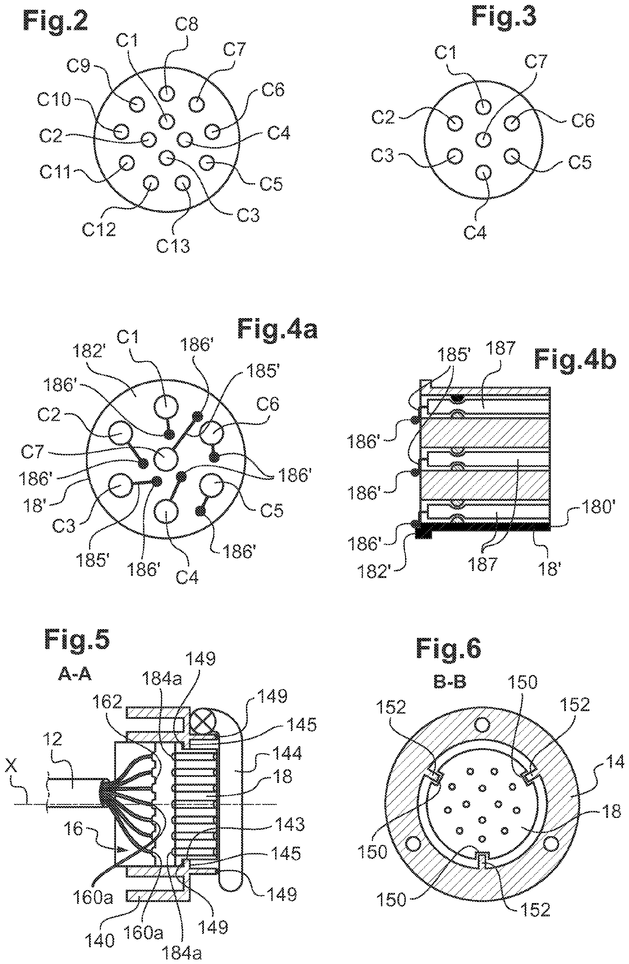

Dans l'exemple représenté, le faisceau 12 est un faisceau à treize fils et la prise 16 comporte treize connecteurs électriques 160, par exemple agencés suivant la norme ISO DIN 11446. Ce schéma d'agencement correspond à celui représenté sur les figures 1 et 2, chaque fil ayant une fonction particulière définie dans la norme ISO DIN 11446, qui sera détaillée plus loin en référence à la figure 2.

La figure 1 représente deux adaptateurs 18 et 18'. En fonction du format de branchement nécessaire, l'un ou l'autre de ces adaptateurs 18, 18' est logé à l'intérieur du corps 140 du boîtier 12, entre la prise 16 et l'ouverture du corps 140, autrement dit entre la prise 16 et le couvercle 144.

Chaque adaptateur 18, 18' respectivement, comporte :
- une face de branchement 180, 180',
- une face opposée de raccordement 182, 182',
- une pluralité de connecteurs électriques 184, 184'.

Lorsqu'un adaptateur 18 ou 18' est logé à l'intérieur du boîtier 14, sa face de branchement 180, respectivement 180', est située en regard du couvercle 144 en position fermée, et sa face de raccordement 182, respectivement 182', est en contact contre la face de raccordement 162 de la prise 16.

Pour un meilleur contact entre la face de raccordement 182 ou 182' d'un adaptateur 18, respectivement 18' et la face de raccordement 162 de la prise 16, le boîtier 14 et/ou chaque adaptateur 18, 18', est avantageusement conformé de sorte que l'adaptateur 18 (ou 18') soit en appui contre la prise 16 lorsque le fond amovible 142 du boîtier est solidaire du corps 140 du boîtier.

Une extrémité de chaque connecteur électrique 184, respectivement 184' d'un adaptateur 18, respectivement 18', débouche sur la face de branchement 180, respectivement 180', selon un schéma d'agencement prédéterminé et une autre extrémité de chaque connecteur électrique 184, respectivement 184', débouche sur la face de raccordement 182, respectivement 182'. En outre, chaque adaptateur 18, respectivement 18', est conformé de sorte que chacun de ses connecteurs électriques 184, respectivement 184', soit relié électriquement avec un connecteur électrique 162 de la prise.

Dans l'exemple représenté, l'adaptateur 18 comporte le même nombre de connecteurs électriques 184 que la prise 16, ces connecteurs électriques 184 étant disposés suivant un même schéma d'agencement que les connecteurs électriques 160 de la prise 16. Dans l'exemple représenté, l'adaptateur 18 comporte ainsi également treize connecteurs électriques 184, agencés suivant la norme ISO DIN 11446. Cet agencement est représenté schématiquement sur la figure 2 qui représente la face de raccordement 162 de la prise 16. Les connecteurs électriques 184 de la face de branchement 180 de l'adaptateur 18 sont agencés de la même manière. Dans cet agencement, les fonctionnalités des connecteurs sont les suivants :

| | |
|---|---|
| C1 : clignotant gauche | C8 : feu de recul |
| C2 : feu anti-brouillard | C9 : borne positive caravane |
| C3 : masse | C10 : borne négative caravane |
| C4 : feu clignotant droit | C11 : masse |
| C5 : veilleuse droite | C12 : Non utilisé |
| C6 : feu stop | C13 : masse |
| C7 : veilleuse gauche | |

Dans l'exemple représenté, l'adaptateur 18' comporte un nombre de connecteurs électriques 184' inférieur au nombre de connecteurs électriques 160 de la prise 16. Chaque connecteur électrique 184' de l'adaptateur 18' se prolonge, sur la face de raccordement 182' de l'adaptateur 18', en un fil conducteur 185' se terminant par un élément connecteur 186' situé en regard d'un connecteur électrique 162 de la prise 16 et en contact électrique avec ce dernier, de sorte que le schéma d'agencement des éléments connecteurs est en partie identique au schéma d'agencement des connecteurs électriques de la prise mais différent du schéma d'agencement des connecteurs électriques de l'adaptateur.

Dans l'exemple représenté sur les figures, l'adaptateur 18' comporte sept connecteurs électriques 184', agencés suivant la norme DIN ISO 1724. Le schéma d'agencement de cette norme est représenté sur la figure 3 : les connexions C1 à C7 représentées ont les mêmes fonctions que les connexions C1 à C7 de la norme ISO DIN 11446, mais ne sont pas agencées de manière similaire les unes par rapport aux autres. La face de branchement 180' de l'adaptateur 18' présente donc un schéma d'agencement des connecteurs électriques 184' identique à la figure 3.

La figure 4a représente schématiquement et de face, la face de raccordement 182' de l'adaptateur 18', dans le sens de branchement. La figure 4b est une vue en coupe longitudinale du même adaptateur 18'.

Tel que visible sur ces deux figures 4a, 4b, les éléments conducteurs 186' sont déportés sur la face de raccordement 182' au moyen des fils conducteurs 185' afin de permettre un contact en face à face avec le connecteur électrique 160 de la prise 16 présentant la fonction appropriée. Ainsi, chaque élément connecteur 186' a une position correspondant à l'une des positions d'un connecteur électrique 160 de la prise 16.

La figure 5 est une coupe du boîtier 14 selon la ligne A-A de la figure 1. Sur cette figure, l'adaptateur 18 et la prise 16 sont représentés distants l'un de l'autre pour plus de clarté. L'ouverture 143 du boîtier 14 est visible uniquement sur cette figure 5.

La figure 5 montre également que le corps 140 du boîtier 14 est conformé du côté de son ouverture 143 de manière à empêcher un retrait de l'adaptateur 18 hors du boitier 14 par cette ouverture 143. A cet effet, le corps 140 du boîtier est pourvu d'un rebord 145 sur au moins une partie de la périphérie de son ouverture 143, ce rebord 145 étant conformé pour venir en appui contre l'adaptateur 18 suivant une direction X de montage. Ce rebord 145 peut également s'étendre sur toute la périphérie de l'ouverture 143. On comprend alors qu'il faut démonter le boîtier 14 de sa plaque support 7 pour pouvoir mettre en place l'adaptateur adéquat 18 (ou 18').

Le boîtier 14 peut également être équipé d'éléments d'étanchéité 149, notamment entre l'adaptateur 18 et le corps 140 du boîtier, par exemple retenu par le rebord 145, et également entre le corps 140 du boîtier 14 et son couvercle 144.

Pour des raisons de simplicité de réalisation, le corps 140 du boîtier peut être réalisé en matériau polymère de forme interne cylindrique, tel que représenté. L'invention n'est toutefois pas limitée par cette forme particulière.

La figure 6 représente une vue en coupe du boîtier 14 selon la ligne B-B de la figure 1. L'adaptateur 18 et le corps 140 du boîtier 14 peuvent être chacun pourvus d'au moins un élément de détrompage, afin de faciliter le montage de l'adaptateur dans une position correcte par rapport à la prise. Sur la figure 6, ces éléments de détrompage comprennent trois ensembles de rainure 150 et nervure 152 de forme complémentaire, s'étendant parallèlement à la direction de montage X de l'adaptateur 18 à l'intérieur du boîtier 14. Cette direction de montage X correspond à la direction de branchement de l'adaptateur 18 sur la prise 16.

Dans l'exemple représenté sur les figures, la face de raccordement 162 de la prise 16 est sensiblement plane et les connecteurs électriques 160, 184 de la prise 16 et de l'adaptateur 18 respectivement peuvent être en contact au moyen de parties disposées sur la surface desdites faces de raccordement ou à proximité immédiate desdites faces de raccordement. Le contact électrique entre les connecteurs peut ainsi être obtenu par simple contact entre les faces de raccordement de la prise et de l'adaptateur.

Par exemple, la figure 5 montre des parties des connecteurs électriques 184 formant des saillies 184a de faible profondeur sur la face de raccordement 182 de l'adaptateur 18, ces saillies 184a coopérant avec des parties 160a de connecteurs électriques 160 situées au fond de dépressions de faible profondeur de la face de raccordement 162 de la prise 16. Par saillies ou dépressions de faible profondeur, on entend des saillies/dépressions ayant des profondeurs de quelques millimètres, par exemple inférieures à 10 mm, voire inférieures à 5 mm et de préférence inférieures à 4mm.

Les figures 5 et 6 représentent un boîtier 14 équipé de l'adaptateur 18 de la figure 1. Bien entendu, l'autre adaptateur 18' de la figure 1 présente également les caractéristiques décrites, afin de permettre d'interchanger les deux adaptateurs 18 et 18'.

Dans l'exemple représenté sur les figures, les adaptateurs 18 et 18' peuvent être équipés de connecteurs électriques de type femelle, notamment conformés pour recevoir une prise mâle, telle que celles disponibles sur les remorques ou caravanes de véhicule. Notamment, la partie femelle des connecteurs électriques 184 ou 184' représentés présente une forme cylindrique dont le centre comprend une broche conductrice 187 (figure 4b).

Le montage d'un dispositif de branchement électrique selon l'invention peut être réalisé de la manière suivante. Une extrémité du faisceau 12 est raccordée électriquement à la prise 16, laquelle est mise en place, par exemple contre le fond amovible 142. L'adaptateur 18 ou 18' choisi est mis en place à l'intérieur du corps 140 du boîtier 14 lequel est ensuite positionné autour de la prise 16. Le boîtier 14 peut ensuite être fixé à son fond amovible 142, l'adaptateur 18 ou 18' étant en appui contre la prise 16 afin d'assurer les contacts électriques entre les connecteurs électriques de la prise 16 et de l'adaptateur 18 ou 18'. Le boîtier est ensuite fixé à la plaque support 7, par exemple par vissage des ensembles vis/écrou 146/148, ces deux opérations (fixation du fond amovible et à la plaque support) pouvant éventuellement être simultanées si les vis 146 traversent à la fois le fond amovible 142 et la plaque support 7. Pour brancher la prise d'une remorque ou d'une caravane, il suffit alors de soulever le couvercle 144 pour accéder à la face de branchement 182 ou 182' de l'adaptateur 18, respectivement 18'.

On comprend que les opérations inverses permettent un démontage facile du boîtier et le changement d'adaptateur 18 ou 18'.

La présente invention a été décrite en référence à des normes de branchement particulière, l'invention ne se limite cependant pas à ces normes.

## Revendications

1. Dispositif de branchement électrique (10) d'un ensemble d'attelage (1) de véhicule comportant :
- un faisceau (12) d'une pluralité de fils électriques,
- un boîtier (14) comportant un corps (140) équipé d'une ouverture (143) fermée par un couvercle (144),
- une prise (16) recevant ledit faisceau (12) de fils électriques et comportant une pluralité de connecteurs électriques (160) raccordés chacun à un fil dudit faisceau (12) de fils et débouchant sur une face de raccordement (162) de la prise,
- un adaptateur (18, 18') logé à l'intérieur du corps (140) du boîtier entre ladite prise et l'ouverture du corps, ledit adaptateur comportant :
- une face de branchement (180, 180') située en regard du couvercle (144) en position fermée,
- une face de raccordement (182, 182') en contact contre la face de raccordement (162) de ladite prise,
- une pluralité de connecteurs électriques (184, 184'), une extrémité de chaque connecteur électrique (184, 184') débouchant sur la face de branchement (180, 180') selon un schéma d'agencement prédéterminé et une autre extrémité de chaque connecteur électrique (184, 184') débouchant sur la face de raccordement (182, 182') et étant conformée de sorte que chaque connecteur électrique (184, 184') de l'adaptateur (18, 18') soit relié électriquement avec un connecteur électrique (160) de la prise (16) **caractérisé en ce que** le corps (140) est équipé d'un fond amovible (142) recevant une extrémité dudit faisceau (12) de fils électriques;
est que ladite prise est logée à l'intérieur du corps (140) du boîtier (12).

2. Dispositif de branchement électrique (10) selon la revendication 1, **caractérisé en ce que** le corps (140) du boîtier est conformé du côté de son ouverture (143) de manière à empêcher un retrait dudit adaptateur (18, 18') hors du boitier par ladite ouverture.

3. Dispositif de branchement électrique (10) selon l'une des revendications 1 ou 2, **caractérisé en ce que** l'adaptateur (18) comporte le même nombre de connecteurs électriques (184) que la prise (16), lesdits connecteurs électrique (184) étant disposés suivant un même schéma d'agencement.

4. Dispositif de branchement électrique (10) selon l'une des revendications 1 ou 2, **caractérisé en ce que** l'adaptateur (18') comporte un nombre de connecteurs électriques (184') inférieur au nombre de connecteurs électriques (160) de la prise (16), chaque connecteur électrique (184') de l'adaptateur se prolongeant, sur la face de raccordement de l'adaptateur, en un fil conducteur (185') se terminant par un élément connecteur (186') situé en regard d'un connecteur électrique (160) de la prise (16) et en contact électrique avec ce dernier, de sorte que le schéma d'agencement des éléments connecteurs (186') est en partie identique au schéma d'agencement des connecteurs électriques (160) de la prise mais différent du schéma d'agencement des connecteurs électriques (184') de l'adaptateur.

5. Dispositif de branchement électrique (10) selon l'une des revendications 1 à 4, **caractérisé en ce que** les faces de raccordement (162 ; 182, 182') de ladite prise (16) et dudit adaptateur (18, 18') sont sensiblement planes et **en ce que** les connecteurs électriques (160 ; 184, 184') de la prise (16) et de l'adaptateur (18, 18') sont en contact au moyen de parties disposées sur la surface desdites faces de raccordement ou à proximité immédiate desdites faces de raccordement.

6. Dispositif de branchement électrique (10) selon l'une des revendications 1 à 5, **caractérisé en ce que** le faisceau de fils électriques (12) est un faisceau à 13 fils, **en ce que** les connecteurs électriques (160) de ladite prise sont agencés suivant la norme ISO DIN 11446 et **en ce que** les connecteurs électriques (184, 184') de l'adaptateur (18, 18') sont agencés suivant la norme DIN ISO 1724 ou suivant la norme DIN ISO 11446.

7. Dispositif de branchement électrique (10) selon l'une des revendications 1 à 6 **caractérisé en ce que** l'adaptateur (18, 18') est équipé de connecteurs électriques (184, 184') de type femelle.

8. Dispositif de branchement électrique (10) selon l'une des revendications 1 à 7, **caractérisé en ce que** l'adaptateur (18, 18') et le corps (140) du boîtier sont chacun pourvus d'au moins un élément de détrompage (150, 152).

9. Ensemble d'attelage (1) de véhicule équipé d'un dispositif de branchement électrique (10) selon l'une des revendications 1 à 8.

10. Véhicule comprenant un dispositif de branchement électrique (10) selon l'une des revendications 1 à 8 ou un ensemble d'attelage (1) selon la revendication 9.

## Patentansprüche

1. Elektrische Verbindungsvorrichtung (10) einer Anhängerkupplungsanordnung (1) eines Fahrzeugs, umfassend:
- ein Bündel (12) von mehreren elektrischen Leitungen,
- ein Gehäuse (14), das einen Körper (140) aufweist, der mit einer Öffnung (143) ausgestattet ist, die durch eine Abdeckung (144) verschlossen ist,
- eine Steckdose (16), welche das Bündel (12) von elektrischen Leitungen aufnimmt und mehrere elektrische Verbinder (160) aufweist, die jeweils an eine Leitung des Bündels (12) von Leitungen angeschlossen sind und auf einer Anschlussfläche (162) der Steckdose münden,
- einen Adapter (18, 18'), der im Inneren des Körpers (140) des Gehäuses zwischen der Steckdose und der Öffnung des Körpers aufgenommen ist, wobei der Adapter aufweist:
- eine Verbindungsfläche (180, 180'), die sich gegenüber der Abdeckung (144) in der geschlossenen Position befindet,
- eine Anschlussfläche (182, 182'), die sich in Kontakt mit der Anschlussfläche (162) der Steckdose befindet,
- mehrere elektrische Verbinder (184, 184'), wobei ein Ende jedes elektrischen Verbinders (184, 184') gemäß einem vorbestimmten Anordnungsmuster auf der Verbindungsfläche (180, 180') mündet und ein anderes Ende jedes elektrischen Verbinders (184, 184') auf der Anschlussfläche (182, 182') mündet und derart ausgebildet ist, dass jeder elektrische Verbinder (184, 184') des Adapters (18, 18') mit einem elektrischen Verbinder (160) der Steckdose (16) elektrisch verbunden ist,
**dadurch gekennzeichnet, dass** der Körper (140) mit einem entfernbaren Boden (142) ausgestattet ist, der ein Ende des Bündels (12) von elektrischen Leitungen aufnimmt;
ist dass die Steckdose im Inneren des Körpers (140) des Gehäuses (12) aufgenommen ist.

2. Elektrische Verbindungsvorrichtung (10) nach Anspruch 1, **dadurch gekennzeichnet, dass** der Körper (140) des Gehäuses auf der Seite seiner Öffnung (143) derart ausgebildet ist, das ein Herausziehen des Adapters (18, 18') aus dem Gehäuse durch die Öffnung hindurch verhindert wird.

3. Elektrische Verbindungsvorrichtung (10) nach einem der Ansprüche 1 oder 2, **dadurch gekennzeichnet, dass** der Adapter (18) dieselbe Anzahl von elektrischen Verbindern (184) wie die Steckdose (16) aufweist, wobei diese elektrischen Verbinder (184) gemäß demselben Anordnungsmuster angeordnet sind.

4. Elektrische Verbindungsvorrichtung (10) nach einem der Ansprüche 1 oder 2, **dadurch gekennzeichnet, dass** der Adapter (18') eine Anzahl von elektrischen Verbindern (184') aufweist, die kleiner als die Anzahl von elektrischen Verbindern (160) der Steckdose (16) ist, wobei jeder elektrische Verbinder (184') des Adapters sich auf der Anschlussfläche des Adapters in einem Leitungsdraht (185') fortsetzt, der durch ein Verbindungselement (186') abgeschlossen ist, das sich gegenüber einem elektrischen Verbinder (160) der Steckdose (16) und in elektrischem Kontakt mit diesem Letzteren befindet, derart, dass das Anordnungsmuster der Verbindungselemente (186') zum Teil identisch mit dem Anordnungsmuster der elektrischen Verbinder (160) der Steckdose, jedoch verschieden von dem Anordnungsmuster der elektrischen Verbinder (184') des Adapters ist.

5. Elektrische Verbindungsvorrichtung (10) nach einem der Ansprüche 1 bis 4, **dadurch gekennzeichnet, dass** die Anschlussflächen (162; 182, 182') der Steckdose (16) und des Adapters (18, 18') im Wesentlichen eben sind, und dadurch, dass sich die elektrischen Verbinder (160; 184, 184') der Steckdose (16) und des Adapters (18, 18') mithilfe von Teilen in Kontakt befinden, die auf der Oberfläche der Anschlussflächen oder in unmittelbarer Nähe der Anschlussflächen angeordnet sind.

6. Elektrische Verbindungsvorrichtung (10) nach einem der Ansprüche 1 bis 5, **dadurch gekennzeichnet, dass** das Bündel von elektrischen Leitungen (12) ein Bündel von 13 Leitungen ist, dadurch, dass die elektrischen Verbinder (160) der Steckdose gemäß der Norm ISO DIN 11446 angeordnet sind, und dadurch, dass die elektrischen Verbinder (184, 184') des Adapters (18, 18') gemäß der Norm DIN ISO 1724 oder gemäß der Norm DIN ISO 11446 angeordnet sind.

7. Elektrische Verbindungsvorrichtung (10) nach einem der Ansprüche 1 bis 6, **dadurch gekennzeichnet, dass** der Adapter (18, 18') mit elektrischen Verbindern (184, 184') vom Typ von Steckbuchsen ausgestattet ist.

8. Elektrische Verbindungsvorrichtung (10) nach einem der Ansprüche 1 bis 7, **dadurch gekennzeichnet, dass** der Adapter (18, 18') und der Körper (140) des Gehäuses jeweils mit wenigstens einem Unverwechselbarkeitselement (150, 152) versehen sind.

9. Anhängerkupplungsanordnung (1) eines Fahrzeugs, welche mit einer elektrischen Verbindungsvorrichtung (10) nach einem der Ansprüche 1 bis 8 ausgestattet ist.

10. Fahrzeug, welches eine elektrische Verbindungsvorrichtung (10) nach einem der Ansprüche 1 bis 8 oder eine Anhängerkupplungsanordnung (1) nach Anspruch 9 umfasst.

## Claims

1. Electrical connection device (10) for a vehicle hitch assembly (1) comprising:
- a bundle (12) for a plurality of electrical wires,
- a casing (14) comprising a body (140) equipped with an opening (143) closed by a cover (144),
- a plug (16) receiving said bundle (12) of electrical wires and comprising a plurality of electrical connectors (160) each connected to a wire of said bundle (12) of wires and emerging on a coupling face (162) of the plug,
- an adaptor (18, 18') housed inside the body (140) of the casing between said plug and the opening of the body, said adaptor comprising:
- a connection face (180, 180') situated facing the cover (144) in closed position,
- a coupling face (182, 182') in contact against the coupling face (162) of said plug,
- a plurality of electrical connectors (184, 184'), one end of each electrical connector (184, 184') emerging on the connection face (180, 180') according to a predetermined arrangement scheme and another end of each electrical connector (184, 184') emerging on the coupling face (182, 182') and being conformed such that each electrical connector (184, 184') of the adaptor (18, 18') is linked electrically with an electrical connector (160) of the plug (16), **characterized in that** the body (140) is equipped with a removable bottom (142) receiving an end of said bundle (12) of electrical wires;
is that said plug is housed inside the body (140) of the casing (12).

2. Electrical connection device (10) according to Claim 1, **characterized in that** the body (140) of the casing is conformed on the side of its opening (143) so as to prevent a removal of said adaptor (18, 18') from the casing through said opening.

3. Electrical connection device (10) according to one of Claims 1 or 2, **characterized in that** the adaptor (18) comprises the same number of electrical connectors (184) as the plug (16), said electrical connectors (184) being disposed according to a same arrangement scheme.

4. Electrical connection device (10) according to one of Claims 1 or 2, **characterized in that** the adaptor (18') comprises fewer electrical connectors (184') than the number of electrical connectors (160) of the plug (16), each electrical connector (184') of the adaptor being extended, on the coupling face of the adaptor, in a conductor wire (185') terminated by a connector element (186') situated facing an electrical connector (160) of the plug (16) and in electrical contact therewith, such that the arrangement scheme of the connector elements (186') is partly identical to the arrangement scheme of the electrical connectors (160) of the plug but different from the arrangement scheme of the electrical connectors (184') of the adaptor.

5. Electrical connection device (10) according to one of Claims 1 to 4, **characterized in that** the coupling faces (162; 182, 182') of said plug (16) and of said adaptor (18, 18') are substantially flat and **in that** the electrical connectors (160; 184, 184') of the plug (16) and of the adaptor (18, 18') are in contact by means of parts disposed on the surface of said coupling faces or in immediate proximity to said coupling faces.

6. Electrical connection device (10) according to one of Claims 1 to 5, **characterized in that** the bundle of electrical wires (12) is a bundle with 13 wires, **in that** the electrical connectors (160) of said plug are arranged according to the ISO DIN 11446 standard and **in that** the electrical connectors (184, 184') of the adaptor (18, 18') are arranged according to the DIN ISO 1724 standard or according to the DIN ISO 11446 standard.

7. Electrical connection device (10) according to one of Claims 1 to 6, **characterized in that** the adaptor (18, 18') is equipped with electrical connectors (184, 184') of female type.

8. Electrical connection device (10) according to one of Claims 1 to 7, **characterized in that** the adaptor (18, 18') and the body (140) of the casing are each provided with at least one polarizing element (150, 152).

9. Vehicle hitch assembly (1) equipped with an electrical connection device (10) according to one of Claims 1 to 8.

10. Vehicle comprising an electrical connection device (10) according to one of Claims 1 to 8 or a hitch assembly (1) according to Claim 9.
